# EUROPEAN PATENT APPLICATION

(11) **EP 4 023 784 A1**
(43) Date of publication of application: **06.07.2022**
(21) Application number: 19950072.9
(22) Date of filing: 22.11.2019
(51) Int. Cl.: C22C 38/00, C23C 2/02

(54) **COMPOSITE COATED STEEL AND PREPARATION METHOD THEREFOR**

(30) Priority: 23.10.2019 CN 201911014734
(71) Applicant: Shougang Group Co., Ltd., Beijing 100041 (CN)
(72) Inventor: JIANG, Guangrui, Beijing 100041 (CN); TENG, Huaxiang, Beijing 100041 (CN); ZHANG, Jun, Beijing 100041 (CN); ZHU, Guosen, Beijing 100041 (CN); LIU, Libin, Beijing 100041 (CN); HAN, Yun, Beijing 100041 (CN); LI, Fei, Beijing 100041 (CN); HU, Yanhui, Beijing 100041 (CN); BAI, Xue, Beijing 100041 (CN); XU, Dechao, Beijing 100041 (CN); LI, Yan, Beijing 100041 (CN); WEI, Dong, Beijing 100041 (CN)
(74) Representative: Sach, Greg Robert
(86) International application number: PCT/CN2019/120345
(87) International publication number: WO 2021/077526

(57) **Abstract**

It is disclosed a composite coated steel and a preparation method therefor, which relate to the technical field of coating. The composite coated steel comprises a steel substrate, an intermediate layer and a coating layer. The intermediate layer is located between the steel substrate and the coating layer. The intermediate layer is an alloy layer of a thickness of 10-200 nm. The composite coated steel has an excellent corrosion resistance, a low surface defect rate for the coating layer, and high peel strength for the coating layer.

## Description

### CROSS-REFERENCE OF RELATED APPLICATIONS

The present application claims a priority of the Patent Application No. 201911014734.4, filed with the Chinese Patent Office on October 23, 2019, which is hereby incorporated by reference in its entirety.

### TECHNICAL FIELD

The present disclosure relates to the field of coating technique, and more particularly to a composite coated steel and a method for preparing the composite coated steel.

### BACKGROUND OF THE INVENTION

The coated steel is a steel formed by coating an anti-corrosion coating layer on the surface of a steel substrate, including galvanized steel, Zn-Al Alloy coated steel, Al-Si Alloy coated steel, and the like.

Although the coated steel has anti-corrosion performance, there are some technical problems existing in practical applications: (1) its anti-corrosion performance is insufficient to meet the requirements of high anti-corrosion steel; (2) the defects on the surface of the steel substrate or the damages to the steel substrate incurred during the coating process will highly affect the quality of the surface of the coating layer; (3) the coating layer is easily peeled off from the steel substrate.

### SUMMARY OF THE INVENTION

In view of the above problems, the present disclosure provides a composite coated steel and a method for preparing the composite coated steel to overcome the above problems or at least partially solve the above problems.

In an aspect, the present disclosure provides a composite coated steel comprising a steel substrate, an intermediate layer, and a coating layer, and the intermediate layer is located between the steel substrate and the coating layer, and the intermediate layer is an alloy layer with a thickness of 10-200 nm.

In some embodiments, the alloy layer may comprise metal-based ceramic particles therein.

In some embodiments, a main alloy element in the alloy layer is a metal element having an atomic number ranging from 21 to 79, excluding an alkali metal element, an alkaline earth metal element, a rare earth element, and a non-metallic element.

In some embodiments, an alloy in the alloy layer includes at least one or any combinations selected from the group consisting of nickel alloy, copper alloy, tin alloy, cobalt alloy, and chromium alloy.

In some embodiments, the metal-based ceramic particles comprise at least one of TiC, SiC and WC.

In some embodiments, the number of layers of the intermediate layer is greater than or equal to 1.

In some embodiments, the metal-based ceramic particles have a particle diameter of 0.005 to 0.1 um, and no more than one-half of the thickness of the intermediate layer.

In some embodiments, a total thickness of the coating layer is less than or equal to 100 um and greater than or equal to1 um.

In some embodiments, the coating layer comprises at least one of galvanized layer, Zn-Al alloy coated layer, Al-Si alloy coated layer, Zn-Al-Mg alloy coated layer, and Al-Zn alloy coated layer.

In some embodiments, the steel substrate comprises at least one of hot-rolled pickled steel sheet or steel strip, and cold-rolled steel sheet or steel strip.

In some embodiments, the steel substrate has the following chemical components in percentage by weight: C, 0.002-0.2%; Si, 0.01-1%; Mn, 0.05-5%; S, 0.008-0.05%; P, 0.008-0.02% ; Al, 0.03-3% ; the rest is Fe and inevitable impurity elements.

In some embodiments, the intermediate layer is a tin alloy layer, and the coating layer is an aluminum-zinc coating layer.

In some embodiments, the intermediate layer has a thickness of 50 nm to 200 nm.

In some embodiments, the intermediate layer is a nickel layer, and the coating layer is galvanized layer.

In some embodiments, the intermediate layer has a thickness of 10 nm to 80 nm.

In some embodiments, the intermediate layer includes a nickel-cobalt alloy layer and a nickel-copper alloy layer formed on the steel substrate in sequence; and the coating layer is a Zn-Al alloy coated layer.

In some embodiments, the intermediate layer is a tin layer, and the coating layer is an Al-Si alloy coated layer.

In some embodiments, the intermediate layer is a mixture of copper and TiC particles, and the coating layer is a galvanized layer.

In some embodiments, the intermediate layer is a mixture of cobalt-5% chromium alloy and SiC particles, and the coating layer is galvanized layer.

In some embodiments, the intermediate layer is a mixture of nickel-10% copper alloy and WC particles, and the coating layer is a galvanized layer.

In another aspect, the present disclosure provides a method for preparing a composite coated steel, and the method may comprise: performing surface treatment on a steel substrate; coating an intermediate layer containing components on an upper surface of the steel substrate after the surface treatment, to obtain a steel containing the intermediate layer; and coating a coating layer on an upper surface of the intermediate layer of the steel containing the intermediate layer to obtain the composite coated steel.

In some embodiments, a process for coating is hot dip coating with a temperature of 400-700°C.

In some embodiments, the surface treatment comprises at least one of surface iron removal, surface oil removal, and surface oxide removal.

In some embodiments, the intermediate layer is coated with a laser cladding process, a physical vapor deposition process or an electroplating process.

One or more technical solutions of the embodiments of the present disclosure have at least one or more of the following technical effects or advantages:

the composite coated steel provided by the embodiments of the present disclosure has excellent anti-corrosion performance, low coating surface defect rate and high peel strength of coating layer;

In some embodiments, the anti-corrosion performance is tested by using the cycle corrosion test specified by GB/T 20854, and a maximum corrosion width of a score is obtained to be as low as 0.5 mm on the basis that the total thickness of the coating layer is only 24 um.

The coating surface defect rate is tested by image recognition, and the surface defect area of the coating layer is measured to be less than the total area of the steel sheet multiplying 1%.

The bending test specified in ASTM B571 is used to test the peel strength test of the coating layer, and the maximum length of a crack is measured to be as low as 0 um.

### BRIEF DESCRIPTION OF THE DRAWINGS

Various other advantages and benefits will become apparent to those of ordinary skill in the art by reading the detailed descriptions of the preferred embodiments in the following. The accompanying drawings are only used for the purpose of illustrating preferred embodiments, and should not be considered as limiting the invention. Further, in the entire drawings, the same components are denoted by the same reference symbol. In the drawings:

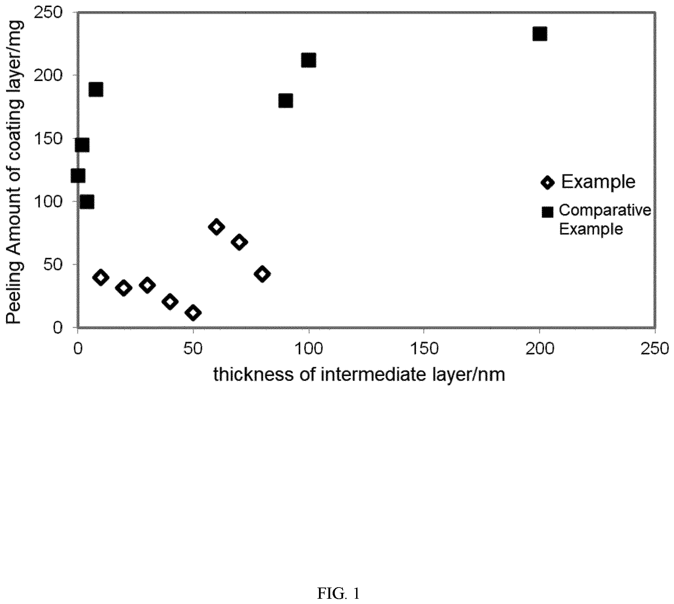

Fig. 1 is a diagram showing a relationship between peeling amounts of coating layers and thicknesses of intermediate layers of the Examples and Comparative Examples in Experimental example 4 according to embodiments of the present disclosure.

### DETAILED DESCRIPTION OF THE INVENTION

Hereinafter, the present disclosure will be specifically described in conjunction with specific embodiments and examples, by which the advantages and various effects of the present disclosure will be more clearly presented. Those skilled in the art should appreciate that these specific embodiments and examples are intended to illustrate the invention and are not for limiting the invention.

Unless otherwise and specifically stated, the terms used herein through the entire specification should be understood as having the normal meaning used in the art. Thus, unless otherwise defined, all technical and scientific terms used herein have the same meaning as that understood by those of ordinary skill in the art. If there is any inconsistency, the meaning is explained by the specification.

Unless otherwise and specifically stated, various raw materials, reagents, instruments, devices, etc. used in the present disclosure can be obtained commercially or can be prepared by existing processes.

The principles of the technical solutions of the embodiments of the present application for addressing the above technical problems are as follows.

The embodiments of the present disclosure provide a composite coated steel comprising a steel substrate, an intermediate layer, and a coating layer, and the intermediate layer is located between the steel substrate and the coating layer, and the intermediate layer is of an alloy layer with a thickness of 10-200 nm.

In some embodiments, the alloy layer comprises metal-based ceramic particles therein. For example, the metal-based ceramic particles include at least one of TiC, SiC, and WC.

In some embodiments, a main alloy element in the alloy layer is a metal element having an atomic number in the range of 21 to 79, excluding an alkali metal element, an alkaline earth metal element, rare earth element, and non-metallic element, including Sc, Ti, V, Cr, Mn, Fe, Co, Ni, Cu, Zn, Ga, Y, Zr, Nb, Mo, Tc, Ru, Rh, Pd, Ag, Cd, In, Sn, Sb, Hf, Ta, W, Re , Os, Ir, Pt, Au.

In some embodiments, the alloy in the alloy layer may include at least one or any combinations of nickel alloy, copper alloy, tin alloy, cobalt alloy, and chromium alloy.

In some embodiments, the number of layers of the intermediate layer is ≥ 1. Optionally, the particles have a particle diameter of 0.005 to 0.1 um, and no more than one-half of the thickness of the intermediate layer. Optionally, the total thickness of the coating layer is ≤ 100 um and ≥ 1 um. In some embodiments, the coating layer comprises at least one of galvanized layer, Zn-Al alloy coated layer, Al-Si alloy coated layer, Zn-Al-Mg alloy coated layer, and Al-Zn alloy coated layer.

In some embodiments, the steel substrate comprises at least one of hot-rolled pickled steel sheet or steel strip, cold-rolled steel sheet or steel strip.

In some embodiments, the steel substrate comprises the following chemical components in percentage by weight: C, 0.002-0.2%; Si, 0.01-1%; Mn, 0.05-5%; S, 0.008-0.05%; P, 0.008-0.02% ; Al, 0.03-3% ; the rest is Fe and inevitable impurity elements.

Based on the same inventive concept, the embodiments of the present disclosure also provide a method for preparing a composite coated steel, and the method may comprise:
performing surface treatment on a steel substrate;
coating an intermediate layer containing the components on an upper surface of the steel substrate after the surface treatment to obtain a steel containing the intermediate layer;
coating a coating layer on an upper surface of the intermediate layer of the steel containing the intermediate layer to obtain a composite coated steel.

In some embodiments, a process for coating is hot dip coating with a temperature of 400-700 °C.

In some embodiments, the surface treatment comprises at least one of surface iron removal, and surface oxide removal. The thickness of the intermediate layer of the composite coated steel provided by the embodiments of the present disclosure is from 10 to 200 nm. The intermediate layer plays roles in three aspects:
(1) The intermediate layer can weaken the effect of the surface of the steel sheet on the quality of the coating layer. As previously mentioned, the surface defects of the steel sheet tend to severely deteriorate the quality of the coating layer; the intermediate layer having a certain thickness can mask the surface defects of the steel sheet and weaken its effect to a certain extent. This is because the most notable effect of the surface defects of the steel sheets on the hot dip coating layer is to affect the solidification nucleation rate of the hot dip coating layer; and a small local defect on the surface of the steel sheet with a thickness less than 1 micrometer in a thickness direction of the steel sheet can significantly change the local nucleation rate of the coating layer because the nucleation radii is often in the order of hundred nanometers. This small defect less than 1 micron in the thickness direction cannot be avoided in steel sheet production. If the surface of this small defect less than 1 micron in the thickness direction is coated with an intermediate layer by a pre-treatment process to form an intermediate layer surface free of defects, the surface defects of the hot dip coating layer can be greatly reduced during subsequent hot dip coating process. In this occasion of application, the thickness of the intermediate layer should be relatively thick, for example, to be up to one-fifth of the thickness of the defect, so as to shield the effect of the defect on the hot dip coating layer.
(2) The intermediate layer can reduce the damage of the steel sheet during hot dip coating process. As mentioned above, when a hot dip Al-Zn coating is formed, the high content of aluminum element has a significant erosion effect on the steel substrate, and a normal treatment method for avoiding the significant erosion effect is to add other alloy elements therein such as silicon. However, the addition of alloy elements will generate a more complicated microstructure of the coating layer and more brittle phase is precipitated, and the processing properties of the coating layer will be deteriorated. If the surface of the steel sheet is coated with an intermediate layer capable of resisting erosion of high-temperature aluminum element in advance, such as a tin alloy layer, since the aluminum and tin can also form a solid solution under high temperature, there is no aggressive reaction erosion, and the tin and zinc also form a solid solution. In this application, the thickness of the intermediate layer needs to be controlled between 50 nanometers to 200 nanometers. This is because if the intermediate layer is too thick, the properties of the intermediate layer itself will significantly affect the overall characteristics of the hot dip coating layer, for example, deteriorating the toughness of the hot dip coating layer and causing cracking during deformation; and if the intermediate layer is too thin, the alloy element for hot dip coating in the hot dip coating process, such as aluminum element, is easy to arrive at the surface of the steel sheet by the diffusion process, and the effect of the steel sheet cannot be eliminated. As results of experiments, an appropriate the thickness for the intermediate layer may be 50-200 nm.
(3) The intermediate layer can provide a unique function. For example, when preparing alloy-galvanized steel sheets, a Fe-Zn alloy phase is often formed between the alloy-galvanized coating layer and the steel sheet. The alloy phase is very brittle and difficult to deform coordinately with the coating layer as a whole in use of the coating layer, and cracks are prone to occur in the alloy phase. If a nickel intermediate layer is prepared in advance on the surface of the steel sheet, a Fe-Ni-Zn intermediate alloy phase will be formed during the alloying and galvanizing process. The toughness of the alloy phase is remarkably increased and it will be better adaptable to the overall deformation of the coating layer. In this application, since the steel sheet needs to conduct an alloying reaction with the zinc in the coating layer under solid-state diffusion, the intermediate layer cannot be too thick, otherwise it is difficult to achieve solid-state diffusion. A suitable thickness is in the range of 10 nm to 80 nm.

It will help to enhance the effects of the intermediate layer in certain aspects and play a composite strengthening role by adding some particles of specific functions in the intermediate layer. The interactions between an alloy in the intermediate layer and different particles are different. According to some embodiments of the disclosure, the intermediate layer contains metal-based ceramic particles such as TiC, SiC, WC particles. The special functions of adding metal-based ceramic particles include, but are not limited to the followings (1) reducing hot damages to the steel sheet substrate from the coating liquid for the hot dip coating, wherein the metal-based ceramic particles have high melting-point properties, and the heat resistance thereof exceeds general alloy coating, and the metal-based ceramic particles are dispersed in the alloy in the intermediate layer, which can prevent the spread of cracks due to thermal damages; (2) absorbing hydrogen in the environment to avoid hydrogen brittleness in high-strength steel, wherein these metal-based ceramic particles and the intermediate layer have certain mismatch therebetween; meanwhile, the metal-based ceramic particles themselves have high cohesive energy; therefore, these particles have high surface energy and can better attract hydrogen atoms, and the hydrogen atoms can be fixed on the surface of the particles; (3) enhancing the toughness of the alloy, wherein if the alloy in the intermediate layer has high strength and poor match with the steel sheet, the toughness tends to be reduced, which cause a risk of cracking, so that the risk of peeling is increased; if a certain amount of metal-based ceramic particles is added, the pile-up of dislocations and the crack propagation in the intermediate layer can be hindered, so that the toughness of the intermediate layer can be increased; (4) improving anti-corrosion performance, wherein the fine metal-based ceramic particles often have high electric potential in electrochemical reactions, being the anode, and the dispersed fine metal-based ceramic particles can make the electrochemical reaction current distribute uniformly, protecting the coating layer itself, so that the coating layer is not prone to pitting corrosion in the environment.

In general, the diameter of the added particles should not exceed the thickness of the intermediate layer. Under this condition, the diameter of the particles should not be too large; otherwise it will become inclusions, severely deteriorating the toughness of the coating layer and causing cracking in the coating layer during deformation. However, the diameter of the particles should not be too small. On the one hand, it is difficult for too fine particles to distribute evenly; on the other hand, it is difficult to achieve the benefits of the present disclosure. If the particles are too small, the effect of the intermediate layer for coordinating deformation between the coating layer and the steel substrate will be minimal, and meanwhile, it is difficult to hinder the erosion of the intermediate layer and steel substrate by the liquid coating layer. In some embodiments, the diameter of the particles is set in a range from 0.01 um to 0.1 um, and no more than one-half of the thickness of the intermediate layer.

The intermediate layer of the composite coated steel according to the embodiments of the present disclosure can be formed by alloy, or a mixture of alloy and particles, depending on requirements of specific applications. For example, in the application for reducing hydrogen brittleness of the steel sheet, some metal-based ceramic particles need to be introduced into the intermediate layer in order to absorb hydrogen atoms diffused from the hot dip coating layer. There is certain mismatch between the metal-based ceramic particles and the intermediate layer; meanwhile, the metal-based ceramic particles themselves have a high cohesive energy, so that these particles have high surface energy and good attraction with hydrogen atoms, and the hydrogen atoms can be fixed to the surface of the particles. In the present disclosure, the number of layers of the intermediate layer is not specified, and multiple layers of intermediate layer can be introduced by design, and each layer can select different materials as needed.

The total thickness of the composite coated steel provided by the embodiments of the present disclosure should not exceed 100 micrometers. The thickness of the intermediate layer is controlled in the range of 10 nanometers to 200 nanometers. If the total thickness of the coating layer exceeds 100 micrometers, the thickness of the coating layer is 1000 times to 10,000 times the thickness of the intermediate layer, and the effect of the intermediate layer is minimal. If the thickness of the intermediate layer is increased, it is prone to uncontrollable risks. For example, fatigue cracks between the intermediate layer and the surface layer result in a decrease in the peel strength of the coating layer, or, electrochemical corrosion between the intermediate layer and the surface layer results in a decreased corrosion resistance; etc. At the same time, the total thickness of the coating layer should not be less than 1 micrometer. Similarly, if the total thickness of the coating layer is too thin, the proportion of the intermediate layer will be too large. The lower limit for the thickness of the intermediate layer is 10 nanometers, and if the total thickness of the coating layer is less than 1 micrometer, then the proportion of the intermediate layer in the total thickness accounts for 1% to 20%. The intermediate layer will have large effect on the properties of the coating layer and there is prone to uncontrollable risks. For example, fatigue cracks between the intermediate layer and the surface layer result in a decrease in the peel strength of the coating layer, or, electrochemical corrosion between the intermediate layer and the surface layer results in a decreased corrosion resistance; etc. Further, if the thickness of the coating layer is too thin, the corrosion resistance of the coating layer will deteriorate greatly.

The composite coated steel and the preparation method thereof according to the present disclosure will be described in detail below in conjunction with specific embodiments.

### Example 1

This example provides a composite coated steel comprising a steel substrate, an intermediate layer, and a coating layer, and the intermediate layer is located between the steel substrate and the coating layer.

Specifically, the intermediate layer is nickel.

Specifically, the number of layers of the intermediate layer is 1.

Specifically, the thickness of the intermediate layer is 200 nm

Specifically, the coating layer is a galvanized layer.

Specifically, the total thickness of the coating layer is 10 um.

Specifically, the steel substrate is hot-rolled pickled steel.

Specifically, the steel substrate comprises the following chemical components in percentage by weight: 0.2% C, 0.2% Si, 1.2% Mn, 0.01% S, 0.01% P, 0.08% Al, the rest being Fe and inevitable impurity elements..

Specifically, the steel substrate has a thickness of 1.50 mm and a width of 1200 mm.

Based on the same inventive concept, the embodiments of the present disclosure also provide a method for preparing the composite coated steel, and the method comprise the followings.

The steel substrate is subjected to surface treatment, and the surface treatment includes surface iron removal, and surface oxide removal.

The intermediate layer containing nickel is coated to the upper surface of the steel substrate after the surface treatment, so as to obtain a steel containing intermediate layer, and the process of coating is laser cladding.

The coating layer is applied to the upper surface of the intermediate layer of the steel containing the intermediate layer at 460° C by way of hot dip coating, so as to obtain the composite coated steel.

### Example 2

This example provides a composite coated steel comprising a steel substrate, an intermediate layer, and a coating layer, and the intermediate layer is located between the steel substrate and the coating layer.

Specifically, the material of the intermediate layer is nickel-cobalt alloy and nickel-copper alloy, and the weight percentage of nickel in the nickel-cobalt alloy is 50%, and the weight percentage of nickel in the nickel-copper alloy is 20%.

Specifically, the number of layers of the intermediate layer is 2.

Specifically, the intermediate layer has a thickness of 10 nm.

Specifically, the coating layer is a Zn-Al alloy coated layer.

Specifically, the total thickness of the coating layer is 100 um.

Specifically, the steel substrate is cold rolled steel.

Specifically, the steel substrate comprises the following chemical components in percentage by weight: 0.02% C, 0.05% Si, 2% Mn, 0.05% S, 0.02% P, 0.6% Al, and the rest is Fe and inevitable impurity elements..

Specifically, the steel substrate has a thickness of 1.50 mm and a width of 1200 mm.

Based on the same inventive concept, the embodiments of the present disclosure also provide a method for preparing the composite coated steel, and the method comprises the followings.

The steel substrate is subjected to surface treatment, and the surface treatment includes surface iron removal, and surface oxide removal.

The intermediate layer is coated to the upper surface of the steel substrate after the surface treatment. The coating process is physical vapor deposition; specifically, first, the nickel-cobalt alloy is coated on the surface of the steel substrate, and then the nickel-copper alloy is coated to the surface of the nickel-cobalt alloy layer previously coated, so as to obtain the steel containing intermediate layer.

The coating layer is applied to the upper surface of the intermediate layer of the steel containing the intermediate layer at 550°C by way of hot dip coating, so as to obtain the composite coated steel.

### Example 3

This example provides a composite coated steel comprising a steel substrate, an intermediate layer, and a coating layer, and the intermediate layer is located between the steel substrate and the coating layer.

Specifically, the material of the intermediate layer is tin.

Specifically, the number of layers of the intermediate layer is 1.

Specifically, the intermediate layer has a thickness of 100 nm.

Specifically, the coating layer is an Al-Si alloy coated layer.

Specifically, the total thickness of the coating layer is 1 um.

Specifically, the steel substrate is cold rolled steel.

Specifically, the steel substrate comprises the following chemical components in percentage by weight: 0.004% C, 0.1% Si, 2.4% Mn, 0.008% S, 0.008% P, 2% Al, and the rest is Fe and inevitable impurity elements.

Specifically, the steel substrate has a thickness of 1.0 mm and a width of 1300 mm.

Based on the same inventive concept, the embodiments of the present disclosure also provide a method for preparing the composite coated steel, and the method comprises the followings.

The steel substrate is subjected to surface treatment, and the surface treatment includes surface iron removal and surface oxide removal.

The intermediate layer containing tin component is coated to the upper surface of the steel substrate after the surface treatment, so as to obtain the steel containing the intermediate layer, and the coating process is electroplating.

The coating layer is applied to the upper surface of the intermediate layer of the steel containing the intermediate layer at 670°C by way of hot dip coating, so as to obtain the composite coated steel.

### Example 4

This example provides a composite coated steel, and is different from Example 1 in that:
the composition of the intermediate layer is a mixture of copper and TiC particles, and the particle diameter of the particles is 0.005 um. Other aspects can be the same as in Example 1.

### Example 5

This example provides a composite coated steel, and is different from Example 1 in that:
the composition of the intermediate layer is a mixture of cobalt-5% chromium alloy and SiC particles, and the particle diameter of the particles is 0.06 um. Other aspects can be the same as in Example 1.

### Example 6

This example provides a composite coated steel, and is different from Example 1 in that: the composition of the intermediate layer is a mixture of nickel-10% copper alloy and WC particles, and the particle diameter of the particles is 0.1 um. Other aspects can be the same as in Example 1.

### Experimental Example 1

Taking existing galvanized steel, Zn-Al alloy coated steel, and Al-Si alloy coated steel without additionally-added intermediate layer as comparative example 1, comparative example 2 and comparative example 3, respectively, the anti-corrosion performance, the surface defect rate of coating layer and the peel strength of coating layer are tested for the Examples 1-6 and the comparative examples 1-3, and the test result are shown in Table 1.

Test Procedures: the cycle corrosion test specified in GB / T 2085 is used to complete the corrosion test. Before the test, the surface of the coating layer is scored to a depth meeting the substrate. The cycle corrosion test is conducted 12 cycles for 96 hours, and the maximum corrosion width at the position of the score is measured. The grade of surface defect of the coating layer is determined by image recognition. If the defect area accounts for more than 6% of the total area of the steel sheet, it is determined as poor; if the defect area accounts for 4% -6% of the total area of the steel sheet, it is determined as middle; if the defect area accounts for 1% -4% of the total area of the steel sheet, it is determined as good; and if the defect area accounts for less than 1% of the total area of the steel sheet, it is determined as perfect. The bending test specified in ASTM B571 is used to test the peel strength for the coating layer. The hot-dip coated steel sheet is bent 180° with a bending diameter of 1 mm, and then the surface of the coating layer is observed to find whether there is any crack visible to the naked eye. If there is any crack, the peel strength of the coating layer is determined as unqualified.

**Table 1**

| | Corrosion width /mm | surface defect of coating layer | Peeling of coating layer |
|---|---|---|---|
| Example 1 | 1 | Excellent | Qualified |
| Example 2 | 0.5 | Excellent | Qualified |
| Example 3 | 1.0 | Excellent | Qualified |
| Example 4 | 0.4 | Excellent | Qualified |
| Example 5 | 0.4 | Excellent | Qualified |
| Example 6 | 0.2 | Excellent | Qualified |
| Comparative Example 1 | 8 | good | Qualified |
| Comparative Example 2 | 5 | good | Unqualified |
| Comparative Example 3 | 10 | good | Qualified |

### Experimental Example 2

Examples 7-18 and Comparative examples 4-10 were arranged to prove that the surface defect ratio of the coating surface of the present disclosure is low. The details are shown in Table 2.

Besides that the thickness of the intermediate layer and the total thickness of the coating layer are different as shown in Table 2, Examples 7-18 and Comparative Examples 4-10 also differ from Example 1 in that: the hot-rolled pickled steel sheet is used as the substrate, and there is ferric oxide scale of a thickness of 300 nm remaining on the surface of the substrate, and the steel sheet is of CQ grade. The temperature for hot dip coating is 460°C.

### Test Procedures:

The cycle corrosion test specified in GB/T 20854 is used to complete the corrosion test. Before the test, the surface of the coating layer is scored to a depth meeting the substrate. The cycle corrosion test is conducted 12 cycles for a total of 96 hours, and the maximum corrosion width of the score is measured. The grade of surface defect of the coating layer is determined by image recognition. If the defect area accounts for more than 6% of the total area of the steel sheet, it is determined as poor; if the defect area accounts for 4% -6% of the total area of the steel sheet, it is determined as middle; if the defect area accounts for 1% -4% of the total area of the steel sheet, it is determined as good; and if the defect area accounts for less than 1% of the total area of the steel sheet, it is determined as perfect. The bending test specified in ASTM B571 is used to test the peel strength for the coating layer. The hot-dip coated steel sheet is bent 180° with a bending diameter of 1 mm, and then the surface of the coating layer is observed to find whether there is any crack visible to the naked eye. If there is any crack, the peel strength of the coating layer is determined as unqualified.

**Table 2**

| | thickness of intermediate layer /nm | Total thickness of coating layer /um | Surface defect of coating layer | Corrosion width/ mm | Peeling of coating layer |
|---|---|---|---|---|---|
| Example 7 | 60 | 1 | good | 2 | qualified |
| Example 8 | 70 | 2 | good | 2 | qualified |
| Example 9 | 70 | 8 | good | 2 | qualified |
| Example 10 | 80 | 10 | Excellent | 1.5 | qualified |
| Example 11 | 100 | 30 | Excellent | 1 | qualified |
| Example 12 | 80 | 50 | Excellent | 1 | qualified |
| Example 13 | 100 | 80 | Excellent | 1 | qualified |
| Example 14 | 120 | 100 | Excellent | 1 | qualified |
| Example 15 | 140 | 20 | Excellent | 1.5 | qualified |
| Example 16 | 150 | 40 | Excellent | 1.5 | qualified |
| Example 17 | 180 | 8 | Excellent | 2 | qualified |
| Example 18 | 200 | 2 | Excellent | 2.5 | qualified |
| Comparative Example 4 | 1 | 20 | poor | 1 | qualified |
| Comparative Example5 | 10 | 10 | poor | 1 | qualified |
| Comparative Example 6 | 20 | 0.5 | poor | 10 | qualified |
| Comparative Example 7 | 400 | 0.2 | Excellent | 12 | unqualified |
| Comparative Example 8 | 300 | 80 | Excellent | 5 | unqualified |
| Comparative Example 9 | 800 | 200 | Excellent | 4 | unqualified |
| Comparative Example 10 | 500 | 150 | Excellent | 6 | unqualified |

### Experimental Example 3

Examples 19-22 and Comparative Examples 11-15 were arranged to prove that the invention is conducive to reducing damages to the surface of the steel substrate during hot dip coating process. The details are shown in Table 3.

Besides that the thickness of the intermediate layer and the total thickness of the coating layer are different as shown in Table 3, Examples 19-22 and Comparative Examples 11-15 also differ from Example 1 in that:

The cold-rolled steel sheet is used as the substrate, and there are fine scores of a thickness of about 50 nm on the surface of the substrate, and the steel sheet is of CQ grade. The type of coating layer is aluminum silicon, and the percentage of silicon element in the coating bath is 7%. The hot dip coating process is used, and the temperature for hot dip coating is 620°C. Before hot dip coating, the intermediate layer is prepared by physical vapor deposition process, and the material of the intermediate layer is nickel-cobalt alloy, and the nickel and cobalt each account for 50% according to mass percentage.

### Test Procedures:

The grade of surface defect of the coating layer is determined by image recognition. If the defect area accounts for more than 6% of the total area of the steel, it is determined as poor; if the defect area accounts for 4% -6% of the total area of the steel sheet, it is determined as middle; if the defect area accounts for 1% -4% of the total area of the steel sheet, it is determined as good; and if the defect area accounts for less than 1% of the total area of the steel sheet, it is determined as perfect. The bending test specified in ASTM B571 is used to test the peel strength test for the coating layer. The hot-dip coated steel sheet is bent 180° with a bending diameter of 1 mm, and then the surface of the coating layer after bending is observed to find whether there is any crack visible to the naked eye. If there is any crack, the peel strength of the coating layer is determined as unqualified. The depth of the cracks on the surface of the steel sheet is determined by metallographic method. The cross section of the sample is polished, and then etched by 4% nitric acid alcohol solution for 20 seconds, and then washed by ethanol and then dried. The cracks at the interface of the steel sheet and the coating layer are observed under a metallographic microscope at 100 times magnification, and the largest length of the cracks is measured. The cycle corrosion test specified in GB/T 20854 is used to complete the corrosion test. The surface of the coating layer is scored before the test, and the depth of the score reaches the substrate. The cycle corrosion test is conducted 12 cycles for a total of 96 hours, and the maximum corrosion width of the score is measured.

**Table 3**

| | Thickness of intermediate layer /nm | Total thickness of coating layer /um | Surface defects of coating layer | Peeling of coating layer | Length of crack /um | Corrosion width/mm |
|---|---|---|---|---|---|---|
| Example 19 | 60 | 24 | Excellent | qualified | 3 | 2 |
| Example 20 | 80 | 60 | Excellent | qualified | 2 | 3 |
| Example 21 | 50 | 70 | Excellent | qualified | 3 | 2 |
| Example 22 | 100 | 80 | Excellent | qualified | 1 | 1.5 |
| Comparative Example 11 | 1 | 0.8 | poor | qualified | 20 | 9 |
| Comparative Example 12 | 3 | 10 | poor | qualified | 21 | 2 |
| Comparative Example 13 | 8 | 0.5 | poor | qualified | 14 | 8 |
| Comparative Example 14 | 120 | 200 | Excellent | unqualified | 2 | 2 |
| Comparative Example 15 | 230 | 200 | Excellent | unqualified | 1 | 5 |

### Experimental Example 4

Examples 23-30 and Comparative Examples 16-22 are arranged to prove that the invention is conducive to reducing damages to the surface of the steel substrate during the hot dip coating process. The details are shown in Table 3.

Besides that the thickness of the intermediate layer and the total thickness of the coating layer are different as shown in Table 3, Examples 23-30 and Comparative Examples 16-22 also differ from Example 1 in that:

The steel sheet is immersed in zinc solution for about 2 seconds, wherein the zinc solution contains 0.13% aluminum and the temperature of the zinc solution is 460°C; and then the steel sheet is taken out. Then the steel sheet is delivered into a heat treatment furnace to be heated up to 500°C for alloying treatment, and the alloying treatment takes about 30 seconds; and finally it is quickly cooled to room temperature and the alloyed coating layer is obtained. Before the hot dip coating, an intermediate layer is prepared on the surface of the substrate by electroplating process, and the material of the intermediate layer is tin.

### Test Procedures:

The impact test specified in ASTM B571 is used to complete the peel strength test for the coating layer, and the impact energy is 1 joule. The diameter of the impact ball is 23 mm. The coating powder peeled off from the surface of the coating layer is collected and weighed. The cycle corrosion test specified in GB/T 20854 is used to complete the corrosion test. The surface of the coating layer is scored before the test, and the depth of the score reaches the substrate. The cycle corrosion test is conducted 12 cycles for total of 96 hours, and the maximum corrosion width of the score is measured.

**Table 4**

| | Thickness of intermediate layer/nm | Total thickness of coating layer/um | Peeling amount of coating layer/mm | Corrosion width/mm |
|---|---|---|---|---|
| Example 23 | 10 | 10 | 40 | 1.5 |
| Example 24 | 20 | 20 | 32 | 2 |
| Example 25 | 30 | 12 | 34 | 2 |
| Example 26 | 40 | 8 | 21 | 3 |
| Example 27 | 50 | 7 | 12 | 3 |
| Example 28 | 60 | 80 | 80 | 1 |
| Example 29 | 70 | 100 | 68 | 1 |
| Example 30 | 80 | 40 | 43 | 1.5 |
| Comparative Example 16 | 0 | 10 | 121 | 3 |
| Comparative Example17 | 2 | 0.4 | 145 | 10 |
| Comparative Example18 | 120 | 9 | 212 | 3.5 |
| Comparative Example19 | 250 | 0.2 | 233 | 12 |
| Comparative Example20 | 90 | 20 | 180 | 2 |
| Comparative Example21 | 4 | 30 | 100 | 2 |
| Comparative Example22 | 8 | 40 | 189 | 2 |

Finally, it should also be noted that the terms "comprise", "include" or any other variations is intended as being non-exclusive, so that a process, method, article, or device including a series of elements will not only include those elements, but also include other elements that are not explicitly listed, or include elements inherent to such process, method, article, or device.

While the preferred embodiments of the invention have been described, those skilled in the art will otherwise change and modify these embodiments once learning the basic inventive concept. Therefore, the appended claims are intended to be construed as including preferred embodiments and all changes and modifications falling into the scope of the invention.

It will be apparent that those skilled in the art could make various modifications and variations to the present invention without departing from the spirit and scope of the invention. Thus, it is intended that the present invention also include these modifications and variations of the invention if these modifications and variations are within the scope of the claims of the present invention and their equivalents.

## Claims

1. A composite coated steel, comprising a steel substrate, an intermediate layer, and a coating layer, the intermediate layer being located between the steel substrate and the coating layer, the intermediate layer being an alloy layer with a thickness of 10-200 nm.

2. The composite coated steel according to claim 1, wherein the alloy layer comprises metal-based ceramic particles therein.

3. The composite coated steel according to claim 1, wherein a main alloy element in the alloy layer is a metal element having an atomic number ranging from 21 to 79, excluding an alkali metal element, an alkaline earth metal element, a rare earth element, and a non-metallic element.

4. The composite coated steel according to claim 1, wherein an alloy in the alloy layer includes at least one or any combinations selected from the group consisting of nickel alloy, copper alloy, tin alloy, cobalt alloy, and chromium alloy.

5. The composite coated steel according to claim 2, wherein the metal-based ceramic particles comprise at least one of TiC, SiC and WC.

6. The composite coated steel according to claim 1, wherein the number of layers of the intermediate layer is greater than or equal to 1.

7. The composite coated steel according to claim 2, wherein the metal-based ceramic particles have a particle diameter of 0.005 to 0.1 um, and no more than one-half of the thickness of the intermediate layer.

8. The composite coated steel according to claim 1, wherein a total thickness of the coating layer is less than or equal to 100 um and greater than or equal to1 um.

9. The composite coated steel according to claim 1, wherein the coating layer comprises at least one of galvanized layer, Zn-Al alloy coated layer, Al-Si alloy coated layer, Zn-Al-Mg alloy coated layer, and Al-Zn alloy coated layer.

10. The composite coated steel according to claim 1, wherein the steel substrate comprises at least one of hot-rolled pickled steel sheet or steel strip, and cold-rolled steel sheet or steel strip.

11. The composite coated steel according to claim 1, wherein the intermediate layer is a tin alloy layer, and the coating layer is an aluminum-zinc coating layer.

12. The composite coated steel according to claim 11, wherein the intermediate layer has a thickness of 50 nm to 200 nm.

13. The composite coated steel according to claim 1, wherein the intermediate layer is a nickel layer, and the coating layer is galvanized layer.

14. The composite coated steel according to claim 13, wherein the intermediate layer has a thickness of 10 nm to 80 nm.

15. The composite coated steel according to claim 1, wherein the intermediate layer includes a nickel-cobalt alloy layer and a nickel-copper alloy layer formed on the steel substrate in sequence; and the coating layer is a Zn-Al alloy coated layer.

16. The composite coated steel according to claim 1, wherein the intermediate layer is a tin layer, and the coating layer is an Al-Si alloy coated layer.

17. The composite coated steel according to claim 1, wherein the intermediate layer is a mixture of copper and TiC particles, and the coating layer is a galvanized layer.

18. The composite coated steel according to claim 1, wherein the intermediate layer is a mixture of cobalt-5% chromium alloy and SiC particles, and the coating layer is galvanized layer.

19. The composite coated steel according to claim 1, wherein the intermediate layer is a mixture of nickel-10% copper alloy and WC particles, and the coating layer is a galvanized layer.

20. A method for preparing a composite coated steel of claims 1-19, the method comprising:
performing surface treatment on a steel substrate;
coating an intermediate layer containing components on an upper surface of the steel substrate after the surface treatment, to obtain a steel containing the intermediate layer;
coating a coating layer on an upper surface of the intermediate layer of the steel containing the intermediate layer to obtain the composite coated steel.

21. The method of preparing a composite coated steel according to claim 20, wherein a process for coating is hot dip coating with a temperature of 400-700°C.

22. The method of preparing a composite coated steel according to claim 20, wherein the intermediate layer is coated with a laser cladding process, a physical vapor deposition process or an electroplating process.
